# EUROPÄISCHE PATENTANMELDUNG

(11) **EP 1 253 236 A1**
(43) Veröffentlichungstag der Anmeldung: **30.10.2002**
(21) Anmeldenummer: 01109880.3
(22) Anmeldetag: 23.04.2001
(51) Int. Cl.: D06M 11/74, E21D 11/00

(54) **Flächiges Brandschutzmaterial und Verwendung dieses Materials zur Brandsicherung von Tunnelröhren**

(71) Anmelder: Bamberger Kaliko GmbH, 96052 Bamberg (DE)
(72) Erfinder: Fuessmann, Klaus, 96120 Bischberg (DE); Hiemenz, Brigitte, 96120 Bischberg (DE); Klenner, Peter, 96129 Geisfeld (DE)
(74) Vertreter: Olgemöller, Luitgard, Dr.

(57) **Zusammenfassung**

Die vorliegende Erfindung betrifft die Verwendung eines brandhemmenden Flächenmaterials, umfassend ein textiles Flächengebilde und eine darauf befindliche, Blähgraphit enthaltende Beschichtung, für die brandhemmende Auskleidung von verkehrsführenden Tunneln. Besonders geeignet hierfür sind neue, erfindungsgemäße Flachmaterialien mit brandhemmenden Eigenschaften, umfassend eine textiles Flächengebilde und eine mindestens einseitige, Blähgraphit aufweisende Beschichtung auf diesem Flächengebilde, dadurch gekennzeichnet, dass mindestens eine Seite des Flachmaterials sichtbares Licht zu mindestens 35%, stärker bevorzugt zu mindestens 45% und am meisten bevorzugt zu mindestens 55% reflektiert oder dadurch gekennzeichnet, dass das textile Flächengebilde aus Fasern besteht oder Fasern aufweist, die nicht brennbar und nicht schmelzbar sind.

## Beschreibung

Die vorliegende Erfindung betrifft ein neues textiles Flächengebilde, das sich als textiles "Fireblocker"-System eignet. Außerdem betrifft die Erfindung die Verwendung von diesem und anderen Brandschutz-Flächengebilden zum Auskleiden von Verkehrs-Tunnelröhren.

"Fireblocker"-Systeme dienen in Tunnelröhren als äußere Schichten, die verhindern sollen, dass sich Brände in die dahinterliegenden Zonen ausbreiten können. Diese Zonen bestehen im Wesentlichen aus Gestein, Beton, teilweise häufig auch aus Isolierschäumen, die aus brennbaren organischen Materialien (z.B. PE-Schaum) aufgebaut sind. Auch im Tunnel verlegte Leitungssysteme können durch diese Fireblockermaterialien nachhaltig geschützt werden.

Stand der Technik ist es, Tunnelröhren mit Spritzbeton zu versehen, wobei im Brandfall sich hinter dem Beton befindliches bzw. im Beton eingelagertes Wasser erhitzt und explosionsartig freigesetzt werden kann. Dies hat zur Folge, dass abplatzende Beton- bzw. Gesteinsteile ein Gefahrenpotenzial für Eingeschlossene wie auch Rettungskräfte darstellt. Um ein Absprengen durch Kälteeinwirkung (Frost) zu verhindern, wird der Beton mit Isolierschaum abgedeckt. Dieser wird durch flammhemmendes Polyestergewebe mit PVC-Beschichtung bzw. mit einer zusätzlichen Betonschicht geschützt.

Im Brandfall (z.B. bei einem brennenden Fahrzeug) entstehen im Tunnel sehr schnell sehr hohe Temperaturen, gegen die das eingesetzte Polyestergewebe nur sehr kurzfristigen Schutz für den Isolierschaum bietet, da das relativ dünne Material keine ausreichende Isolierwirkung bietet. Der Schmelzpunkt der verwendeten Fasern wird schnell erreicht, so dass die Schutzwirkung vor den möglicherweise durch Wasser abgesprengten Bauteilen nicht mehr gewährleistet ist. In vielbefahrenen Tunneln wird deshalb der Isolierschaum durch eine zusätzliche Betonschicht geschützt, was sehr zeitaufwendig und teuer ist.

Textile Flächengebilde mit einer Intumeszenzbeschichtung auf Basis von Blähgraphit sind bekannt. Diese Materialien sind in der Lage, bei Hitzeeinwirkung ihr Volumen derart zu vergrößern, dass stabile Isolierschichten entstehen und somit eine schnelle Brandausbreitung verhindert werden kann. Die EP 752 458 beschreibt die flammhemmende Ausrüstung von aus brennbaren Fasern hergestellten textilen Flächengebilden, die im häuslichen Bereich eingesetzt werden können. Hierfür wird auf die Flächengebilde Blähgraphit in Form von diskret haftenden Flocken aufgebracht. Solche Gebilde sind für Außenanwendungen wie die Verkleidung von Tunneln nicht geeignet, da ihnen eine ausreichende Stabilität gegenüber den in Tunneln auftretenden Witterungseinflüssen (z.B. Wind, Abgase) und einer durch die schnell fortschreitende Verschmutzung immer wieder erforderlich werdenden mechanischen Reinigung fehlt.

In der DE 197 18 876 A1 wurde vorgeschlagen, cellulosische Flächengebilde mit Blähgraphit und weiteren Zusätzen zu beschichten, um sie flammfest zu machen. Diese können als Feuerund Thermosperren eingesetzt werden. Die DE OS 196 17 592 schlägt einen Kunststoffschichtkörper, z.B. einen Kraftstofftank mit einer Schicht aus einem Kunstharz und einer intumeszierenden Mischung vor. Die Schicht kann Blähgraphit enthalten. Auch andere Brandschutzmaterialien, z.B. Brandschutzpolster (DE 43 25 966 A1) oder schwerbrennbare Schaumstoffprofile (DE 42 11 762 A1) mit Blähgraphit sind bekannt; mit ihnen können Wandöffnungen bzw. Zwischenräume oder Fugen brandschützend abgedichtet werden.

Aufgabe der Erfindung ist es, flächige Brandschutzmaterialien bereitzustellen, die sich für die Auskleidung von Tunneln, insbesondere Strassentunneln, aber auch Schienen- oder sonstigen verkehrsführenden Tunneln, eignen. Diese Aufgabe wird durch den Vorschlag gelöst, für diesen Zweck textile Flächengebilde aus vorzugsweise im wesentlichen nicht brennbaren und besonders bevorzugt auch bei sehr hohen Temperaturen nicht schmelzbaren Fasern zu verwenden, die mindestens einseitig, vorzugsweise jedoch beidseitig mit einer Beschichtung aus Blähgraphit und einem vorzugsweise flammhemmenden Bindemittel und ggf. weiteren Zusätzen versehen sind.

Das textile Flächengebilde kann in beliebiger Weise geformt sein, z.B. ein Gewebe, ein Gewirke, ein Filz oder ein Gelege sein. Gewebe und andere Gebilde mit untereinander fixierten Fäden sind bevorzugt. Die Fasern dieses Gebildes sind vorzugsweise nicht brennbar und ganz besonders bevorzugt auch bei hohen Temperaturen, wie sie bei einem Brand auftreten können, nicht schmelzbar. Solche Fasern können z.B. aus organischen Materialien bestehen, die bei hohen Temperaturen in ein kristallines Kohlenstoffgerüst übergehen wie bestimmte Melamin- oder Phenolharzfasern oder para-Aramidfasern, oder solche Materialien in Mischung mit anderen günstigen Materialien enthalten. Alternativ können aber auch Fasern aus anorganischen Keramikmaterialien eingesetzt werden, die sehr hohe Temperaturen aushalten können. Solche Keramikmaterialien werden beispielsweise in der Luft- und Raumfahrt eingesetzt. Glas ist dagegen ein weniger günstiges Material: E-Glas beispielsweise schmilzt bereits bei etwa 800°C und ist damit den genannten organischen Materialien deutlich unterlegen.

Das textile Flächengebilde wird vorzugsweise mit dem Blähgraphit in Form einer Paste beschichtet. Die Paste enthält neben dem Blähgraphit, der z.B. in Pulver-, Granulat- oder Flockenform eingearbeitet sein kann, vor allem ein Bindemittel, bei dem es sich vorzugsweise um einen polymeren Binder handelt, der nachvernetzbar ist und entsprechend ausgehärtet werden kann. Dabei ist es natürlich wünschenswert, dass auch der Binder selbst flammgeschützt ist. Solche Bindemittel sind im Handel erhältlich. Als Beispiele seien halogenfreie Polymere auf Basis Acrylsäureester, Polyvinylalkohole, Polyurethane, Latices und hochvernetzbare Harze wie Melaminharze genannt. Halogenfrei sollten diese Materialien sein, damit im Brandfall kein Halogen bzw. keine Halogensäure abgespalten werden kann. Gegebenenfalls können der Paste auch weitere Flammschutzmittel zugesetzt werden. Das Bindemittel wird in Form einer Lösung, Emulsion oder Suspension eingesetzt, oder es wird ein Suspensions- oder Lösungs- oder Quellmittel zusetzt, damit man eine Paste mit einer Konsistenz erhält, die sich für das Auftragen auf das Flächengebilde eignet. Ist die Paste zu dünnflüssig, kann die Viskosität mit einem Verdickungsmittel (z.B. einem Acrylsäureester) eingestellt werden. Ggf. werden der Paste geeignete Vernetzungskatalysatoren zugemischt. Das Mengenverhältnis von Blähgraphit zu Bindemittel kann in geeigneter Weise frei gewählt werden, wobei es natürlich günstig ist, einen hohen Anteil an Blähgraphit vorzusehen, z.B. 10-50 Gew.-%, bezogen auf alle Bestandteile der Paste. Die Obergrenze wird in der Regel durch die mechanischen Eigenschaften der ausgehärteten Beschichtung bestimmt: Es ist darauf zu achten, dass genügend Bindermaterial vorhanden ist, um den Blähgraphit mechanisch stabil in die Schicht einzubinden. Die Untergrenze wird durch die Flammschutzeigenschaften des erhaltenen Materials bestimmt: Die Beschichtung sollte eine ausreichende Menge an Blähgraphit enthalten, damit dessen Flammschutzwirkung voll zur Geltung kommt. In der Regel sollten mindestens etwa 30 g/qm Blähgraphit auf dem textilen Flächenmatererial vorhanden sein, vorzugsweise etwa 50 bis 150 g/qm.

In einer besonders bevorzugten Ausgestaltung wird der Paste, die für die Beschichtung der ins Tunnelinnere weisenden Seite des erfindungsgemäßen Brandschutzmaterials vorgesehen ist, weiterhin ein Weißpigment zugemischt, beispielsweise Titandioxid, Alabasterbrillantweis, Kaolin oder ein ähnliches Material. Alternativ oder zusätzlich kann auch die fertig aufgetragene Paste vor oder nach dem Aushärten mit einer weißpigmenthaltigen zweiten Paste abgedeckt werden, die ebenfalls ein Bindemittel enthalten kann. Wird das Weißpigment in die Blähgraphit enthaltende Paste eingearbeitet, ist es günstig, etwa 3-10 Gew.-% Weißpigment, bezogen auf das Gesamtgewicht der Paste, vorzusehen. Wird das Weißpigment als zusätzlicher Überzug auf die Blähgraphit-Beschichtung aufgebracht, genügt es, eine nur geringe Menge von etwa 2-10 g/qm aufzutragen. Das Weißpigment kann hierfür als Aufschlämmung in geeigneten Suspensions- bzw. Stellmitteln eingesetzt und z.B. in einer Menge von ca. 1:4 einer Suspension oder Dispersion eines geeigneten Binde- oder Vernetzungsmittels zugemischt werden, wie oben für die Blähgraphitpaste angegeben, z.B. Polyacrylaten oder Polyacetaten. Besonders günstig ist es, die für die Weißpigmentbeschichtung vorgesehene Paste aufzuschäumen (z.B. auf ein Gewicht von ca. 200 g/l) und über eine Spaltbeschichtung auf dem textilen Flächengebilde aufzutragen. Nach dem Trocknen und Vernetzen wird diese Schicht z.B. über einen Kalander mit ca. 100-200 N/mm verpreßt, wodurch man einen kratzfesten, undurchsichtigen und stark reflektierenden Überzug enthält. Mit dieser Ausgestaltung der Erfindung werden das Reflexionsvermögen des Brandschutzmaterials und damit die Sichtverhältnisse im Tunnel stark verbessert, was insbesondere für die Verwendung des Materials in Autotunneln vorteilhaft ist.

Um das erfindungsgemäße Brandschutzmaterial gegenüber chemischer und vor allem starker mechanischer Reinigung (üblich sind Hochdruckreiniger oder Bürstenreiniger) ausreichend stabil zu machen, kann seine Oberfläche in geeigneter Weise modifiziert werden. Dies kann beispielsweise durch eine Hydrophobierung der Oberfläche und/oder durch eine Verbesserung ihrer mechanischen Beständigkeitswerte geschehen. Um die Oberfläche hydrophob zu machen, können z.B. Fluorcarbonharze, Paraffinwachse, Silikone oder Polytetrafluorethylen-Dispersionen in die Paste eingearbeitet werden, die als einzige bzw. oberste Schicht vorgesehen ist. Auch eine zusätzliche Vernetzung durch ein weiteres Vernetzungsmittel kann die mechanische Stabilität verbessern und die Schicht ggf. hydrophober machen. Alternativ kann die oberste Schicht mit einem geeigneten Hydrophobierungsmittel imprägniert werden, oder es wird eine Deckschicht ("Topcoat") aufgebracht, die besonders kratzfest ist. Weitere Möglichkeiten sind eine Beschichtung mit Materialien, die bestimmte Oberflächenstrukturen mit extrem guten schmutzabweisenden Eigenschaften erzeugen (sogenannte "Nanobeschichtungen" mit "Lotuseffekt") oder eine Plasmabehandlung mit hydrophobierenden Gasen.

Das textile Flachmaterial wird, ggf. nach einer Vorbehandlung (z.B. einer Plasmabehandlung für die Verbesserung der Hafteigenschaften) mit der angerührten, den Blähgraphit enthaltenden Paste wie bereits erwähnt einseitig oder auch beidseitig beschichtet. Dies kann durch Aufstreichen, Rakeln oder jede andere beliebige Methode erfolgen, die sich unter anderem nach der Viskosität der Paste richtet. Anschließend wird ggf. überschüssiges Lösungs- oder Dispersionsmittel entfernt, z.B. durch Trocknen, und die aufgestrichene Paste wird je nach Art der vernetzbaren Komponenten gehärtet, z.B. durch Wärme oder Licht; ggf. kann die vernetzbare Komponente auch selbsthärtend sein. Es kann sich auch anbieten, die Paste in mehr als nur einem Arbeitsgang auf das Flachmaterial aufzubringen und nach jedem Arbeitsgang oder aber erst nach Aufbringen des gesamten Materials einen Härtungsschritt, ggf. nach Trocknung, vorzusehen.

Soll die auf diese Weise gebildete Beschichtung mit einer oder weiteren Schichten (z.B. einer Weißpigment-Paste oder einem Topcoat) überzogen werden, so können die erforderlichen Trocknungs- und Härtungsschritte auch erst nach Aufbringen mehrerer oder sogar aller Schichten vorgenommen werden.

Nachstehend soll die Erfindung anhand eines Beispiels näher erläutert werden.

Ein Gewebe mit einem Quadratmetergewicht von 225 g aus Nm 40/2 Basofil (Melaninharzfaser der Firma BASF) und Technora oder Kevlar (Para-Aramidfaser; Kevlar ist eine Marke von Dupont) im Verhältnis 60:40 mit 27,5 Kettfäden pro cm und 15 Schußfäden pro cm in 2/1 Köperbindung wurde einseitig mit einer Paste aus
- Kappaflamm T2/163 50 Gew.-Teile
   (Paste mit 55% Blähgraphit
   der Kapp-Chemie)
- Versolit FL-HV 50 Gew.-Teile
   (Melaminharzhaltiges Bindemittel
   hochvernetzbar, Fa. Orpil)
- Kronos RN 43 7 Gew.-Teile
   (Titandioxid, Fa. Kronos)
- Baysilone Öl 1 Gew.-Teil
   (Silikonöl, Fa. Bayer)
- Salmiakgeist 25% auf pH 10
- TC-Verdicker auf Viskosität 1,9 Ps/S

beschichtet. Das Beschichtungsgewicht betrug 300 g/qm. Anschließend erfolgte eine Imprägnierung mit 30 g/l Oleophobol SD (Fluorcarbonharz der Ciba Spezialitätenchemie). Die Beschichtung und die Imprägnierung wurden anschließend bei 160°C vernetzt.

Man erhielt ein Produkt von guter Flexibilität mit einer grauweißen Beschichtungsseite. Im Vergleich zu einer Blähgraphitbeschichtung ohne Weißpigment wurden die folgenden optischen Messwerte erhalten:

| | Mit Weißpigment | ohne Weißpigment |
|---|---|---|
| Absorption | 45 % | 90 % |
| Reflexion | 55 % | 10 % |

Gemessen wurde das sichtbare Wellenspektrum von 400 bis 700 nm.

Eine Probe des Materials wurde verschmutzt und mit einem Hochdruckreiniger gereinigt. Bereits nach einer relativ kurzen Reinigungszeit wurde ein sehr gutes Reinigungsergebnis erhalten; die Beschichtung blieb dabei unbeschädigt.

Zur Prüfung des Intumeszenzverhaltens wurde das Material mit einem Bunsenbrenner beflammt. Im Bereich der Beflammung kam es zu einer Volumenzunahme von bis zu 180 %. Es entstand ein in sich stabiler Blähschaum mit guten Isoliereigenschaften. Das Gewebe zeigte keine Schmelztropfenbildung. Der Basofilanteil erzeugte ein stabiles Kohlenstoffgerüst.

## Patentansprüche

1. Verwendung eines brandhemmenden Flächenmaterials, umfassend ein textiles Flächengebilde und eine darauf befindliche, Blähgraphit enthaltende Beschichtung, für die brandhemmende Auskleidung von verkehrsführenden Tunneln.

2. Verwendung nach Anspruch 1, **dadurch gekennzeichnet, dass** das brandhemmende Flächenmaterial alle übrigen Auskleidungsmaterialien zum Innern des Tunnels hin abdeckt.

3. Verwendung nach Anspruch 1 oder 2, **dadurch gekennzeichnet, dass** das textile Flächengebilde unbrennbar und vorzugsweise nicht schmelzbar ist.

4. Verwendung nach einem der Ansprüche 1 bis 3, **dadurch gekennzeichnet, dass** die Blähgraphit enthaltende Beschichtung zusätzlich ein Weißpigment enthält.

5. Verwendung nach einem der voranstehenden Ansprüche, **dadurch gekennzeichnet, dass** die Blähgraphit enthaltende Beschichtung weiterhin ein Hydrophobierungsmittel aufweist.

6. Verwendung nach einem der voranstehenden Ansprüche, **dadurch gekennzeichnet, dass** die ins Innere des Tunnels weisende Seite des textilen Flächengebildes mit einer ein Weißpigment aufweisenden Schicht versehen ist, derart, dass das Weißpigment dieser Schicht optisch wahrnehmbar ist.

7. Verwendung nach einem der voranstehenden Ansprüche, **dadurch gekennzeichnet, dass** die ins Innere des Tunnels weisende Seite des textilen Flächengebildes mit einer kratzfesten und/oder hydrophobierenden Schicht abgedeckt ist.

8. Flachmaterial mit brandhemmenden Eigenschaften, umfassend eine textiles Flächengebilde und eine mindestens einseitige, Blähgraphit aufweisende Beschichtung auf diesem Flächengebilde, **dadurch gekennzeichnet, dass** mindestens eine Seite des Flachmaterials sichtbares Licht zu mindestens 35%, stärker bevorzugt zu mindestens 45% und am meisten bevorzugt zu mindestens 55% reflektiert.

9. Flachmaterial nach Anspruch 8, **dadurch gekennzeichnet, dass** die Blähgraphit aufweisende Beschichtung zusätzlich ein Weißpigment enthält.

10. Flachmaterial nach Anspruch 8, **dadurch gekennzeichnet, dass** zumindest eine Seite des Materials mit einer ein Weißpigment enthaltenden Schicht abgedeckt und ggf. mit einer lichtdurchlässigen kratzfesten Überbeschichtung versehen ist.

11. Flachmaterial mit brandhemmenden Eigenschaften, umfassend ein textiles Flächengebilde und eine mindestens einseitige, Blähgraphit aufweisende Beschichtung auf diesem Flächengebilde, **dadurch gekennzeichnet, dass** das textile Flächengebilde aus Fasern besteht oder Fasern aufweist, die nicht brennbar und nicht schmelzbar sind.

12. Flachmaterial nach Anspruch 11, **dadurch gekennzeichnet, dass** die nicht brennbaren und nicht schmelzbaren Fasern ausgewählt sind unter Melaminharzfasern, Phenolharzfasern, Para-Aramidfasern, Gemischen von Fasern aus den vorgenannten Materialien, Fasern aus Mischungen der vorgenannten Materialien und Fasern, die mindestens eines der vorgenannten Materialien in Mischung mit anderen Materialien enthalten.

13. Flachmaterial nach Anspruch 11 oder 12, **dadurch gekennzeichnet, dass** mindestens eine Seite des Flachmaterials sichtbares Licht zu mindestens 35%, stärker bevorzugt zu mindestens 45% und am meisten bevorzugt zu mindestens 55% reflektiert.

14. Flachmaterial nach Anspruch 13, **dadurch gekennzeichnet, dass** die Blähgraphit aufweisende Beschichtung zusätzlich ein Weißpigment enthält.

15. Flachmaterial nach Anspruch 13, **dadurch gekennzeichnet, dass** zumindest eine Seite des Materials mit einer ein Weißpigment enthaltenden Schicht abgedeckt und ggf. mit einer lichtdurchlässigen kratzfesten Überbeschichtung versehen ist.
